# EUROPÄISCHE PATENTSCHRIFT

(11) **EP 0 599 857 B1**
(45) Veröffentlichungstag und Bekanntmachung des Hinweises auf die Patenterteilung: **01.03.1995**
(21) Anmeldenummer: 92914228.9
(22) Anmeldetag: 08.07.1992
(51) Int. Cl.: A23C 19/082, A23C 19/05

(54) **VERWENDUNG VON SAUREN NATRIUMPOLYPHOSPHATEN ZUR HERSTELLUNG VON KÄSE**
USE OF ACIDIC SODIUM POLYPHOSPHATES IN THE MANUFACTURE OF CHEESE
UTILISATION DE POLYPHOSPHATES DE SODIUM ACIDIQUE POUR LA FABRICATION DE FROMAGE

(30) Priorität: 24.08.1991 DE 4128124
(43) Veröffentlichungstag der Anmeldung: 08.06.1994
(73) Patentinhaber: BK LADENBURG GmbH, Gesellschaft für chemische Erzeugnisse, D-68526 Ladenburg (DE)
(72) Erfinder: MERKENICH, Karl, D-6149 Fürth/Fahrenbach (DE); MAURER-ROTHMANN, Andrea, D-6923 Waibstadt-Daisbach (DE); SCHEURER, Günter, D-6733 Hassloch (DE); TÄNZLER, Richard, D-6947 Laudenbach (DE)
(74) Vertreter: Grussdorf, Jürgen, Dr.
(86) Internationale Anmeldenummer: EP9201533
(87) Internationale Veröffentlichungsnummer: WO9303623

(56) Entgegenhaltungen:
- EP-A- 0 018 604
- 'Food Chemicals Codex' 1981 , NATIONAL ACADEMY PRESS , WASHINGTON, D.C., USA inder Anmeldung erw hnt Pages 295, 296
- JOHA LEITFADEN : 'Die Schmelzk zeherstellung' 1989 , BK LADENBURG , LADENBURG,DEUTSCHLAND

## Beschreibung

Gegenstand der Erfindung ist die Verwendung von sauren Natriumpolyphosphaten zur Herstellung von Naturkäse, Schmelzkäse und Käsezubereitungen.

Phosphate werden in der Lebensmittelindustrie und auch in der Käseindustrie bereits in großem Umfang eingesetzt. In der Käseindustrie werden insbesondere Orthophosphate, Pyrophosphate und Tripolyphosphate und höher kondensierte Polyphosphate mit P₂O₅-Gehalten von 60-70 Gew.-% mit Natrium, Kalium oder Calcium als Kationen in großem Umfang als Schmelzsalze eingesetzt. Es ist bekannt, daß diese Verbindungen eine gewisse antibakterielle Wirkung, insbesondere gegen grampositive Bakterien besitzen und damit als Konservierungsmittel für Nahrungsmittel eingesetzt werden können. Ebenfalls bekannt ist eine antioxidative Wirkung für Fleisch und Fleischprodukte. Solche Polyphosphate werden auch als Schmelzkäse-Zusätze und bei der Herstellung von Kondensmilch als Stabilisatoren verwendet.

Bei den Polyphosphaten ist zu unterscheiden zwischen den kettenförmigen, systematisch als Catena-Polyphosphaten bezeichneten und den ringförmigen Cyclo-Polyphosphaten, welche häufig noch als Metaphospate bezeichnet werden. Die Herstellung einer Reihe von definierten sauren Metaphosphaten mit P₂O₅ -Gehalten von 75 - 78 Gew.% und Na₂O-Gehalten von 24 - 17 Gew.% und Wassergehalten von 2 - 6 Gew.% ist in der US-P 27 74 672 beschrieben, wonach diese Produkte als Backtriebmittel eingesetzt werden können. Dieses Patent gibt auch das Phasen-Zustands-Diagramm für Natriumphosphat/Phosphorsäuremischungen in Abhängigkeit von der Temperatur wieder.

Gemäß dem Food Chemical Codex (FCC III) sind Polyphosphate und Metaphosphate nahrungsmittelrechtlich zugelassen, wenn sie P₂O₅-Gehalte von 60 - 71 Gew.-% aufweisen.

Überaschenderweise wurde nunmehr festgestellt, daß saure Natriumpolyphosphate mit P₂O₅-Gehalten von 70,5 - 77 Gew.-% und Natriumoxidgehalten von 20 - 27 Gew.-% welche noch einen Restwassergehalt von etwa 2 - 3 Gew.-% besitzen sowohl als Schmelzhilfsmittel als auch als Stabilisierungsmittel in der Käseindustrie mit großem Erfolg eingesetzt werden können.

Vorzugsweise haben die Polyphosphate einen P₂O₅ -Gehalt von 71 - 73 Gew.%. Polyphosphat mit einem P₂O₅-Gehalt von 70,0 oder darunter sind als Stabilisierungsmittel praktisch wirkungslos. Es ist bisher nicht bekannt, worauf dieser plötzliche Wirkungswechsel beruht.

Für eine Verwendung der Polyphosphate als Schmelzsalz ist ein Gehalt von ca. 2-4 Gew.-% der Schmelzmasse erforderlich. Da diese Verbindungen jedoch relativ sauer sind, ist es vorzuziehen, zusätzlich zu den Polyphosphaten andere bekannte Schmelzsalze, wie Trinatriumcitrat oder Trinatriumphosphat in einer Menge von 0,5 - 2 Gew.-% einzusetzen und entsprechend dem Gehalt an erfindungsgemäßem Polyphosphat auf 0,1 - 1 Gew.-% zu senken.

Die erfindungsgemäße stabilisierende und konservierende Wirkung tritt bei einer Konzentration von 0,1 - 0,5 Gew.-% der Käsemasse ein. Da die erfindungsgemäßen Phosphate beim Zusatz zur Kesselmilch an das Eiweiß angelagert und mit diesem ausgefällt werden, können die erfindungsgemäßen Phosphate auch bereits der Kesselmilch in einer Menge von 0,001 - 0,05 Gew.-%, vorzugsweise 0,003 - 0,01 Gew.-%, zugesetzt werden. Die bisher als Stabilisatoren der Kesselmilch zugesetzten Nitrate, welche gesundheitlich bedenklich sind, sind dann entbehrlich.

Als besonders vorteilhaft hat es sich ferner erwiesen, zusätzlich zu den Polyphosphaten noch einen Anteil von 0,1 - 10 Gew.-Teilen Maddrell-Salz pro Teil Polyphosphat zuzumischen, wodurch bei fast gleichguter Schmelzsalz- und Stabilisatorwirkung die Azidität der Mischung erheblich gesenkt wird.

Saure Polyphosphate, die erfindungsgemäß verwendet werden, sind vorwiegend kettenförmige Kondensationsprodukte mit mittleren Kettenlängen von etwa 8 - 20, die teilweise auch quervernetzt sind, jedoch nur in geringem Umfang, d.h. einer Menge von unter 2 Gew.-% Natriumtrimetaphosphat und Natriumtetrametaphosphat enthalten. Das vorstehend definierte Wasser ist chemisch in Form von Hydroxylgruppen an die Phosphatketten statistisch gebunden und bewirkt, daß die Verbindungen relativ stark sauer reagieren wenn sie in Wasser gelöst werden, wobei die 5 Gew.-%ige Lösung einen pH-Wert von ca. 1,5 - 2,5 aufweist.

Die Verbindungen sind sehr hygroskopisch und müssen daher unter Feuchtigkeitsausschluß aufbewahrt werden damit sie nicht verklumpen. Wie alle Polyphosphate unterliegen sie in wässriger Lösung einer langsamen Hydrolyse. Chromatographische Analyse zeigt, daß es sich bei diesen Produkten nicht um definierte Verbindungen sondern um Gemische handelt, in der von nieder- bis hochmolekularen Kondensationsprodukten praktisch alle vorkommen. Der mittlere Polymerisationsgrad läßt sich dabei durch die oben beschriebene Verfahrensweise im gewissen Umfang einstellen.

Das Löseverhalten der Substanz in Wasser hat ein Maximum bei einem Phosphatgehalt von etwa 77 Gew.-% P₂O₅ und wird um so besser, je höher der Wassergehalt, das heißt der Gehalt an freien Hydroxylfunktionen ist, wodurch auch gleichzeitig der Vernetzungsgrad entsprechend gering ist. Produkte mit erhöhtem Gehalt an freien Hydroxylfunktionen zeigen jedoch zunehmende Hygroskopizität und greifen vor allem bei erhöhten Temperaturen metallische Oberflächen an, was Probleme beim Vermahlen und Verarbeiten ergeben kann.

Der Gehalt an Wasser bzw. freien Hydoxylfunktionen wird zweckmässiger Weise durch Bestimmung des Glühverlusts unter Zusatz von geglühtem ZnO bestimmt.

Die unter weiterem Wasseraustritt vernetzten Polyphosphate, die in der Literatur häufig auch als Natriumultrametaphosphate bezeichnet werden, lösen sich nur langsam unter Abfallen des pH-Werts der Lösung in Wasser. Sie sind daher erfindungsgemäß weniger geeignet und sollen nur in untergeordneter Menge in den Phosphaten enthalten sein.

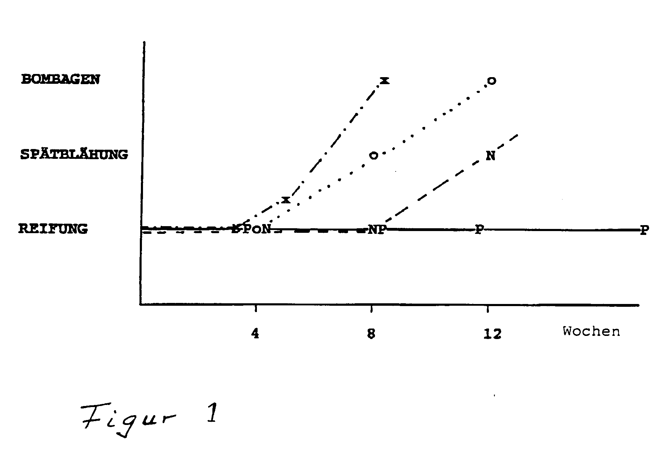

Die erfindungsgemäßen verwendeten sauren Natriumpolyphosphate lassen sich nach bekannten Methoden zur Herstellung von Schmelzphosphaten unter geeigneten Temperaturen und Mischungsbedingungen herstellen (vgl. US-P 27 74 672). Im Labormaßstab werden Gemische aus Mononatriumphosphat und Phophorsäure im Platintiegel im Muffelofen verschmolzen und auf Edelstahl-Oberflächen gequentscht. Im technischen Maßstab werden die Produkte in Kammeröfen kontinuierlich oder diskontinuierlich aus Mononatriumphosphat mit einem definierten Überschuß an freier Phosphorsäure oder direkt aus einer eingestellten Suspension aus Natronlauge und Phosphorsäure erschmolzen. Die Eigenschaften und das Löseverhalten der Produkte können durch die Einstellung des Verhältnisses der Natronlauge zur Phosphorsäure, der Verweilzeiten und der Schmelztemperaturen gesteuert werden. Aus dem in der US-P 27 74 672 enthaltenen Phasendiagramm, welches als Figur 1 beigefügt ist, läßt sich entnehmen, daß für die erfindungsgemäßen Produkte mit 20 - 27 Gew.-% Na₂O, 70 - 77 Gew.-% P₂O₅ und 2 - 3 Gew.-% Wasser Reaktionstemperaturen von über 400 °C notwendig sind. Bevorzugt wird eine Temperatur von 400 - 500 °C. In Abhängigkeit von der Ansatzgröße und der kontinuierlichen oder diskontinuierlichen Verfahrensweise sind Verweilzeiten von 20 Minuten bis etwa 2 Stunden, vorzugsweise etwa eine Stunde notwendig, um die Kondensation in gewünschten Maße durchzuführen und das dabei entstehende Wasser abzudampfen. Im Anschluß an die Schmelze wird die gesamte Mischung auf gekühlte Metall-Oberflächen, beispielsweise entsprechende Edelstahlwalzen mit Innenwasserkühlung gegossen, wobei das Material zu einem farblosen, durchscheinenden Phosphatglas erstarrt, welches zunächst grob gebrochen und dann in entsprechenden Mühlen fein gemahlen wird. Das Produkt ist hygroskopisch, so daß während der ganzen Bearbeitungsprozesses Luftfeuchtigkeit ausgeschlossen werden muß. Auch bei der Lagerung sind dicht schliessende Behälter zu verwenden da sich sonst das Produkt vollständig verhärtet.

In den folgenden Beispielen wird die Herstellung der Phosphate und die neue Verwendung näher beschrieben, ohne daß damit die Erfindung eingeschränkt werden soll.

### Beispiel 1

### Saures Natriumpolyphosphat

100 kg Mononatriumphosphat (Anhydrid) und 36 l 83 Gew.-%ige Phosphorsäure (= 60 kg) (Na/P = 0,62) werden homogenisiert und in einen auf 600 °C vorgewärmten diskontinuierlichen Kammerofen eingefüllt. Man erhitzt das Gemisch etwa 60 Minuten auf eine Schmelztemperatur von 400 °C (Badtemperatur). Die Schmelzoberfläche zeigt noch deutlich Blasenbildung von austretendem Kondenswasser. Im Anschluß läßt man die klare Schmelze auf eine kalte Gußkokille ab. Das Material wird beim Abkühlen blasenfrei und völlig glasklar transparent. Das Material wir anschließend aus der Gußkokille ausgetragen, gebrochen, gemahlen und in luftdichten Behältern aufbewahrt.

| | |
|---|---|
| pH-Wert: | 1,7 ( 5 Gew.-%ige Lösung) |
| P₂O₅ Gehalt: | 77,0 Gew.-% |
| Na₂O Gehalt: | 20,55 |
| H₂O Gehalt: | 2,45 |

### Beispiel 2

### Natriumpolyphosphat

50 Gew.-%ige Natronlauge und 83 Gew.-%ige Phosphorsäure werden im Verhältnis Na/P = 0,73 kontinuierlich über zwei Dosierpumpen und getrennte Leitungen in einen Reaktionsbehälter geleitet. Es entsteht eine heiße Suspension von teilneutralisierter Orthophosphorsäure, die im Anschluß in einen direktbeheizten Kammerofen geleitet wird. Die Beheizung des Kammerofens wird über die Ablufttemperatur geregelt und auf 500 °C gehalten. Die Suspension durchläuft unter Kondensation den Kammerofen mit einer mittleren Verweilzeit von etwa 2 Stunden. Das durchreagierte Schmelzphosphat wird am Ende des Ofens kontinuierlich über eine Überlaufrinne in eine wassergekühlte Kühltrommel abgeführt. Dort erstarrt das Material zu einem Glas, wird im Anschluß gebrochen und gemahlen. Die Abfüllung erfolgt in luftdichte Gebinde, auf trockene Lagerung ist zu achten.

| | |
|---|---|
| pH-Wert: | 1,9 |
| P₂O₅ Gehalt: | 73,0 Gew.-% |
| Na₂O Gehalt: | 24,2 |
| H₂O Gehalt: | 2,8 |
| Löslichkeit: | 90 Minuten (5 Gew.-%ige Lösung gerührt) klarlöslich |
| Glühverlust: | 2,0 Gew.-% |

### Eingesetzte Rohstoffe:

### 1) Thermische Phosphorsäure (83 Gew.-%ig)

Herstellung durch Verbrennung von elementarem Phosphor und Adsorption des entstehenden Phosphorpentoxids in Phosphorsäure unter fortlaufendem Verdünnen auf eine definierte Dichte durch Zugabe von entionisiertem Wasser.

### Produktdaten:

| | |
|---|---|
| Dichte (25 °C) | 1,664 g/ml |
| P₂O₅ | 60,1 Gew.-% |
| As | < 0,5 ppm typisch: 0,1 ppm |
| F | < 10 ppm |
| Schwermetalle | < 20 ppm |
| Kupfer | < 10 ppm |
| Zink | < 3 ppm |
| H₃PO₃ | < 0,1 Gew.-% |
| Blei | < 1 ppm |

### 2) Natronlauge (50 Gew.-%ig)

| | |
|---|---|
| Dichte | 1,52 g/l |
| Gehalt | 50,0 Gew.-% |
| Hg | < 1 ppm |
| Al | < 10 ppm |
| Eisen | < 3 ppm |
| Chlorid | < 10 ppm |
| Kalium | < 50 ppm |
| Arsen | < 0,3 ppm |

### Beispiel 3

### Herstellung von Schnittkäse

3.000 kg Milch mit einem Eiweißgehalt von 3,4 Gew.-% und einem Fettgehalt von 3,1 Gew.-% werden bei 71-74°C pasteurisiert, auf 28-32°C abgekühlt und mit ca. 10 l einer Säuerungskultur (0,15-0,5 Gew.-%), 600 g Calciumchlorid, 300 ml Labextrakt (1:10.000) und statt des üblichen Natriumnitrats (600 g) mit 150 g Natriumpolyphosphat gemäß Beispiel 1 versetzt. Nach einer Gerinnungs- und Dickungsphase von ca. 1 Stunde wird in mehreren Stufen ausgekäst und Molke abgezogen. Nach ca. 2 Stunden wird ein Frischkäsebruch von ca. Hirsekorngröße erhalten.

Der Käsebruch wird in runde Preßformen (9-10 kg) gefüllt und mit 6-8 kg/cm² bei 17-18°C 4 Stunden gepreßt.

Die fertigen Käselaibe werden in einem Salzbad von 24 Gew.-% NaCl bei 12-15°C 3-5 Tage gesalzen und bei 14-16°C 2-3 Monate gereift. Danach wird der Käse entweder mit Öl eingerieben oder mit Wachs überzogen und noch 2-3 Monate bei 5-10°C nachgereift.

### Beispiel 4

### Herstellung von streichfähigem Schmelzkäse

Schmelzkäse 45 Gew.-% Fett i.Tr., streichfähig
15.0 kg Emmentaler
6.0 kg Chester
2.0 kg Tilsiter
2.5 kg Molkenpulver
3.0 kg Butter
2.0 kg Vorschmelzware
0.85 kg Na-Polyphosphat (60 Gew.-% P₂O₅)
0.14 kg Na-Polyphosphat gemäß Beispiel 2
22.6 kg Wasser
Die vorstehenden Produkte werden in einem Rührkessel zusammengegeben und unter langsamen Rühren unter Durchleiten von Wasserdampf in etwa 10-20 min auf die Schmelztemperatur von 90-92°C erwärmt. Danach wird unter kräftigem Rühren homogenisiert, die Masse in Formen gegossen, auf Raumtemperatur abgekühlt und 12 Stunden zwischengelagert. Die Endlagerung bis zum Gebrauch erfolgt bei 6°C.

Es wird ein streichfähiger Schmelzkäse erhalten, welcher 46 Gew.-% Fett i.Tr. bei einer Gesamttrockenmasse von 46 Gew.-% enthält. Auch nach einer Lagerzeit von 4-6 Monaten verändern sich Aussehen und Konsistenz nicht.

### Beispiel 5

### Herstellung von Schmelzkäse aus Frischkäse (70 Gew.-% Fett i.Tr.)

30,0 kg Frischkäse (gemäß Beispiel 3)
0,45 kg Schmelzsalz (Trinatriumcitrat/Natriumpolyphosphat - 60 Gew.-% P₂O₅)
0,1 kg Citronensäure
0,1 kg Natriumpolyphosphat gemäß Beispiel 2
1,0 kg Na-Caseinat
2,0 kg Butter
2,0 kg Wasser
werden durch Durchleiten von Wasserdampf 10 min auf ca. 90°C erhitzt und gemäß Beispiel 4 weiterverarbeitet. Trotz des geringen Schmelzsalzgehaltes wird ein einwandfreier Schmelzkäse erhalten, welcher auch nach einer Lagerzeit von 6 Monaten unverändert ist.

### Beispiel 6

### Herstellung von Schnittkäse

3.000 kg Milch mit einem Eiweißgehalt von 3,4 Gew.-% und einem Fettgehalt von 3,1 Gew.-% werden bei 71 - 74°C pasteurisiert, auf 28 - 32°C abgekühlt und mit ca. 10 l einer Säuerungskultur (0,15 - 0,5 Gew.-%), 600 g Calciumchlorid, 300 ml Labextrakt (1:10.000) und statt des üblichen Natriumnitrats (600 g) mit 150 g einer Mischung aus 90 % Maddrell und 10 % P71 gemäß Beispiel 1 versetzt.

Nach einer Gerinnungs- und Dickungszeit von ca. 1 Stunde wird in mehreren Stufen ausgekäst und die Molke abgezogen. Nach ca. 2 Stunden wird ein Frischkäsebruch von ca. Hirsekorngröße erhalten.

Der Käsebruch wird in runde Preßformen (9 - 10 kg) gefüllt und mit 6 - 8 kg/cm² bei 17 - 18°C 4 Stunden gepreßt.

Die fertigen Käselaibe werden in einem Salzbad von 24 Gew.-% NaCl bei 12 - 15°C 3 - 5 Tage gesalzen und bei 14 - 16°C 2 - 3 Monate gereift. Danach wird der Käse entweder mit Öl eingerieben oder mit Wachs überzogen und noch 2 - 3 Monate bei 5 - 10°C nachgereift.

### Beispiel 7

### Herstellung von streichfähigem Schmelzkäse

Schmelzkäse 45 Gew.-% Fett i.Tr., streichfähig
15.0 kg Emmentaler
6.0 kg Chester
2.0 kg Tilsiter
2.5 kg Molkenpulver
3.0 kg Butter
2.0 kg Vorschmelzware
0.10 % Maddrell
0.90 % P 71 (Na-Polyphosphat mit P₂O₅ 71 %)
22.6 kg Wasser
Die vorstehenden Produkte werden in einem Rührkessel zusammengegeben und unter langsamem Rühren unter Durchleiten von Wasserdampf in etwa 10 - 20 min auf die Schmelztemperatur von 90 - 92°C erwärmt. Danach wird unter kräftigem Rühren homogenisiert, die Masse in Formen gegossen, auf Raumtemperatur abgekühlt und 12 Stunden zwischengelagert. Die Endlagerung bis zum Gebrauch erfolgt bei 6°C.

Es wird ein streichfähiger Schmelzkäse erhalten, welcher 46 Gew.-% Fett i.Tr. bei einer Gesamttrockenmasse von 46 Gew.-% enthält. Auch nach einer Lagerzeit von 4 - 6 Monaten verändern sich Aussehen und Konsistenz nicht.

### Beispiel 8

### Herstellung von Schmelzkäse aus Frischkäse (70 Gew.-% Fett i.Tr.)

30,0 kg Frischkäse (gemäß Beispiel 3)
0,45 kg Schmelzsalz (Trinatriumcitrat/Natriumpolyphosphat - 60 Gew.-% P₂O₅)
0,1 kg Citronensäure
0,1 kg Natriumpolyphosphat gemäß Beispiel 7
1,0 kg Na-Caseinat
2,0 kg Butter
2,0 kg Wasser
werden durch Durchleiten von Wasserdampf 10 min auf ca. 90°C erhitzt und gemäß Beispiel 4 weiterverarbeitet. Trotz des geringen Schmelzsalzgehaltes wird ein einwandfreier Schmelzkäse erhalten, welcher auch nach einer Lagerzeit von 6 Monaten unverändert ist.

In den vorstehenden Beispielen beziehen sich alle Prozentangaben auf Gewichtsprozente, soweit nichts anderes bestimmt ist.

### Beispiel 9

### Untersuchung des Reifungsverhaltens

Gemäß Beispiel 3 bzw. 6 hergestellte Schnittkäselaibe (Gouda-Typ) werden mit entsprechenden Laiben verglichen, die keinen Stabilisator, Nitrat als Stabilisator oder Polyphosphate mit einem P₂O₅-Gehalt unter 70 % enthalten.

Gemäß Beispiel 3 wurden P₂O₅-Gehalte von 70,5, 73 und 76 % getestet.

Gemäß Beispiel 6 wurde 90 % Maddrellsalz mit 10 % Polyphosphat mit P₂O₅-Gehalt von 70,5, 73 und 76 % gemischt.

Natrium-Nitrat wurde in einer Menge von 10 g/100 l Kesselmilch zugesetzt.

Als Polyphosphat-Vergleich wurden Polyphosphate mit P₂O₅-Gehalten von 60; 64; 68 und 70 % in einer Menge von 0,25 - 1,0 g/l Kesselmilch eingesetzt.

Die Reifung wurde über eine Zeit von 13 Wochen beobachtet. In der beigefügten Figur sind die Ergebnisse wiedergegeben, wobei unter Spätblähung ein Auftreiben der Wachshülle und unter Bombagen ein Zerreißen aufgrund einer übermäßigen Blähung verstanden wird. Die Kurve der erfindungsgemäßen Produkte ist mit P,, die mit Nitrat mit N, die Kontrolle mit x und die der Schmelzphosphate mit O bezeichnet. Die verschiedenen Phosphatmischungen ergeben dabei identische Kurven.

### Ergebnisse:

1. Der Zusatz der Polyphoshate P 60 - P 70 zeigt sowohl bei Zugabe zur Kesselmilch als auch bei Anwendung im Waschwasser beim Einsatz in Naturkäse keinerlei Einfluß auf die Bildung anaerober Mikroorganismen. Naturkäse, die mit diesen Polyphosphaten behandelt wurden, zeigen nach 4 Wochen bereits Fehlgärung bzw. Spätblähung, wie dies auch beim Nullversuch (ohne Nitrat bzw. Polyphosphatzusatz) verstärkt der Fall ist.
2. Mit Nitrat behandelte Käse zeigen nach einer Lagerzeit von 8 - 12 Wochen ebenfalls Anzeichen einer Fehlgärung, die durch die Entwicklung anaerober Mikroorganismen hervorgerufen wird.
3. Alle Käse, die unter Zusatz der Polyphosphate P 70,5, P 73, P 76 und Mischungen aus Maddrell/P70,5, Maddrell/P 73, Maddrell/P76 (Verhältnis 90/10) sowie Maddrell hergestellt wurden, zeigten selbst nach 13 Wochen Lagerzeit keinerlei Anzeichen einer Fehlgärung bzw. Spätblähung.

## Patentansprüche

1. Verwendung von sauren Natriumpolyphosphaten zur Herstellung von Naturkäse, Schmelzkäse und Käsezubereitungen, **dadurch gekennzeichnet, daß** das Polyphosphat einen P₂O₅ Gehalt von 70,5 - 77 Gew.-%, einem Na₂O Gehalt von 20 - 27 Gew.-%, einen Wassergehalt von 2 - 3 Gew.-% und einem mittleren linearen Kondensationsgrad von 8 - 20 besitzt.

2. Verwendung von sauren Natriumpolyphosphaten gemäß Anspruch 1, **dadurch gekennzeichnet,** daß die Polyphosphate als längere Ketten (catena Verbindungen) vorliegen, welche gegebenenfalls vernetzt sind und Natriummetaphosphate (Tri- und Tetraphosphate) in unter 2 Gew.-% enthalten sind.

3. Verwendung von sauren Natiumphosphaten gemäß Anspruch 1 oder 2, **dadurch gekennzeichnet,** daß die Polyphosphate einen P₂O₅ -Gehalt von 71 - 75 Gew.-% und einen Na₂O ⁻ Gehalt von 22 - 26 Gew.-% aufweisen.

4. Verwendung von sauren Natriumpolyphosphaten gemäß Anspruch 1 oder 2 zur Herstellung von Schnittkäse, **dadurch gekennzeichnet**, daß man pro Liter Kesselmilch 0,001 - 0,05 Gew.-%, vorzugsweise 0,003 - 0,01 Gew.-%, Polyphosphat zufügt.

5. Verwendung von sauren Natriumpolyphosphaten gemäß Anspruch 1 oder 2 zur Herstellung von Schmelzkäse, **dadurch gekennzeichnet,** daß man der Schmelzkäserohmasse 2 - 4 Gew.-% oder in Verbindung mit anderen Schmelzsalzen 0,1 - 1 Gew.-%, vorzugsweise 0,5 Gew.-%, Polyphosphat zufügt.

6. Verwendung von sauren Natriumpolyphosphaten gemäß Anspruch 1 oder 2 zur Herstellung von Käsezubereitungen aus Frischkäse, **dadurch gekennzeichnet,** daß man der Masse 0,1 - 0,5 Gew.-% Polyphosphat zufügt.

7. Verwendung gemäß einem der Ansprüche 1 - 5, **dadurch gekennzeichnet,** daß auf 1 Teil Polyphosphat noch 0,1 - 10 Gew.-Teile Maddrellsalz enthalten ist.

8. Verwendung gemäß Anspruch 7, **dadurch gekennzeichnet,** daß zur Herstellung von Naturkäse auf 1 Teil Polyphosphat 0,1 - 1 Teil Maddrellsalz und zur Herstellung von Schmelzkäse 1 - 10 Teile Maddrellsalz zugefügt wird.

## Claims

1. Use of acidic sodium polyphosphates for the production of natural cheese, processed cheese and cheese preparations, characterised in that the polyphosphate possesses a P₂O₅ content of 70.5 - 77 wt.%, an Na₂O content of 20 - 27 wt.%, a water content of 2 - 3 wt.% and an average linear degree of condensation of 8 - 20.

2. Use of acidic sodium polyphosphates according to claim 1, characterised in that the polyphosphates are present as comparatively long chains (catena compounds) which are possibly cross-linked and sodium metaphosphates (tri- and tetraphosphates) are contained in less than 2 wt.%.

3. Use of acidic sodium phosphates according to claim 1 or 2, characterised in that the polyphosphates have a P₂O₅ content of 71 - 75 wt.% and an Na₂O content of 22 - 26 wt.%.

4. Use of acidic sodium polyphosphates according to claim 1 or 2 for the production of cuttable cheese, characterized in that, per litre of dairy milk, one adds thereto 0.001 - 0.05 wt.%, preferable of 0.003 - 0.01 wt.% of polyphosphate.

5. Use of acidic sodium polyphosphates according to claim 1 or 2 for the production of processed cheese, characterised in that, to the processed cheese raw mass, one adds thereto 2 - 4 wt.% or, in combination with other processing salts, 0.1 - 1 wt.%, preferably 0.5 wt.% of polyphosphates.

6. Use of acidic sodium polyphosphates according to claim 1 or 2 for the production of cheese preparations from fresh cheese, characterised in that one adds 0.1 - 0.5 wt.% of polyphosphate to the mass.

7. Use according to one of claims 1 - 5, characterised in that, per 1 part of polyphosphate, 0.1 - 10 wt. parts of Maddrell's salt is also present.

8. Use according to claim 7, characterised in that, for the production of natural cheese, per 1 part of polyphosphate, 0.1 - 1 part of Maddrell's salt is added thereto and, for the production of processed cheese, 1 - 10 parts of Maddrell's salt.

## Revendications

1. Utilisation de polyphosphates de sodium acides pour la formulation de fromage naturel, de fromage fondu et de préparations fromagères, caractérisée en ce que le polyphosphate possède une teneur en P₂O₅ de 70,5 - 77% en poids, une teneur en Na₂O de 20 - 27% en poids, une teneur en eau de 2 - 3% en poids et un degré de condensation linéaire moyen de 8 - 20.

2. Utilisation de polyphosphates de sodium acides selon la revendication 1, caractérisée en ce que les polyphosphates sont présents sous forme de très longues chaînes (caténanes), qui sont éventuellement réticulés et qui contiennent des métaphosphates de sodium (tri- et tétraphosphates) en une quantité inférieure à 2% en poids.

3. Utilisation de phosphates de sodium acides selon la revendication 1 ou 2, caractérisée en ce que les polyphosphates présentent une teneur en P₂O₅ de 71 - 75% en poids et une teneur en Na₂O de 22 - 26% en poids.

4. Utilisation de polyphosphates de sodium acides selon la revendication 1 ou 2, pour la préparation de fromage à découper, caractérisée en ce que, par litre de lait de chaudière, on ajoute 0,001 - 0,05% en poids, de préférence 0,003 - 0,01% en poids de polyphosphate.

5. Utilisation de polyphosphates de sodium acides selon la revendication 1 ou 2, dans la préparation de fromage fondu, caractérisée en ce qu'on ajoute à la matière première de fromage fondu, 2 - 4% en poids, ou bien en liaison avec d'autres sels de fusion, 0,1 - 1% en poids, de préférence 0,5% en poids de polyphosphate.

6. Utilisation de polyphosphates de sodium acides selon la revendication 1 ou 2, pour la préparation de formulations fromagères à partir de fromage frais, caractérisée en ce qu'on ajoute à la matière, 0,1 - 0,5% en poids de polyphosphate.

7. Utilisation selon l'une quelconque des revendications 1 - 5, caractérisée en ce que, pour 1 partie de polyphosphate, sont encore présentes 0,1 - 10 parties en poids de sel de Maddrell.

8. Utilisation selon la revendication 7, caractérisée en ce que, pour la préparation de fromage naturel, à 1 partie de polyphosphate, on ajoute 0,1 - 1 partie de sel de Maddrell et, pour la préparation de fromage fondu, on ajoute 1 - 10 parties de sel de Maddrell.
